# EUROPEAN PATENT APPLICATION

(11) **EP 1 956 279 A1**
(43) Date of publication of application: **13.08.2008**
(21) Application number: 06833387.1
(22) Date of filing: 27.11.2006
(51) Int. Cl.: F16L 19/08

(54) **PIPE JOINT**

(30) Priority: 29.11.2005 JP 2005343385
(71) Applicant: DAIKIN INDUSTRIES, LTD., Osaka-shi, Osaka 530-8323 (JP)
(72) Inventor: NAKATA, Haruo, Sakai-shi, Osaka 591-8511 (JP)
(74) Representative: HOFFMANN EITLE
(86) International application number: PCT/JP2006/323583
(87) International publication number: WO 2007/063801

(57) **Abstract**

A pipe joint is provided in which a sleeve that is integrated with a nut is separated from the nut by threading of the nut so as to stabilize the separation timing of the sleeve from the nut and ensure the sealing property at portions where the sleeve bites. The sleeve is integrated with the nut before joining the pipe. The sleeve is cut off and separated from the nut when the nut is threaded to the joint body such that a contact surface of the sleeve and a contact surface of the joint body contact each other. When the nut is further threaded to the joint body, a distal end portion of the sleeve is pressed by a guide surface formed on the joint body and deformed. As a guided surface is guided by the guide surface, the distal end portion bites into an outer peripheral surface of the pipe.

## Description

### TECHNICAL FIELD

The present invention relates to a pipe joint for joining, for example, refrigerant pipes.

### BACKGROUND ART

A pipe joint with which a pipe is inserted into a joint portion of a joint body and then a nut is screwed to the joint body to connect the pipe to the joint portion of the joint body has been known as a pipe joint used for joining of a pipe through which fluid is made to flow into a refrigerant pipe of a refrigeration device. A flareless joint as disclosed by a prior art of Patent Document 1 has been frequently adopted as the pipe joint as described above. According to this flareless joint, when a nut is screwed into a joint body, a sleeve is interposed between the joint body and the nut, and the sleeve bites into the outer periphery of the pipe by the screwing, thereby ensuring the sealing performance between the pipe and the joint portion of the joint body.
Patent Document 1: Japanese Laid-Open Patent Publication No. 2003-74768

### DISCLOSURE OF THE INVENTION

However, the pipe joint as described above is constructed by the joint body, the nut, and the sleeve, and thus a sleeve, which is a relatively small part, may be lost until a pipe is joined. Furthermore, when a pipe is joined, a sleeve, which is a small part, is assembled to the pipe. This can lower the workability. To solve the above problems, a pipe joint having a following configuration may be used. A sleeve is integrated with a nut before the nut is screwed into a joint body and the sleeve is cut off from the nut by the screwing of the nut to the joint body.

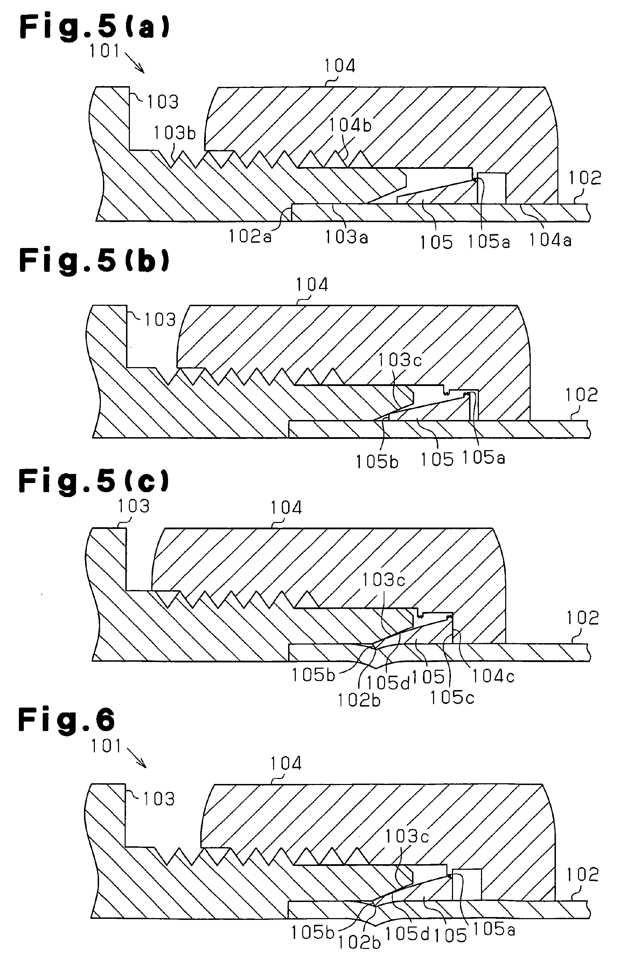

Fig. 5 shows one example of a pipe joint having a sleeve and a nut which are integrated with each other. A pipe joint 101 has a joint body 103, a nut 104 and a sleeve 105. A pipe 102 is joined to the joint body 103. The nut 104 is threaded to the joint body 103. The sleeve 105 is located between the joint body 103 and the nut 104 when connecting the pipe 102 and the joint body 103 so as bite into an outer periphery of the pipe 102. As shown in Fig. 5(a), the sleeve 105 is integrated with the nut 104, and the sleeve 105 is connected to the nut 104 at a proximal portion 105a. When the pipe 102 is connected to the pipe joint 101, the pipe 102 is fitted into a holding hole 104a of the nut 104, and then a distal end portion 102a of the pipe 102 is inserted into a joint hole 103a of the joint body 103. An internal thread portion 104b of the nut 104 is threaded to an external thread portion 103b of the joint body 103.

When the nut 104 is threaded to the joint body 103, a guide surface 103c of the joint body 103 abuts against a distal end portion 105b of the sleeve 105. As the nut 104 is further threaded to the joint body 103, the pressing force of the sleeve 105 increases. Accordingly, as shown in Fig. 5(b), the sleeve 105 is cut off at the proximal portion 105a, and the sleeve 105 is separated from the nut 104.

When the nut 104 is further threaded to the joint body 103, the guide surface 103c of the joint body 103 abuts against a distal end portion 105b of the sleeve 105 and an inner surface 104c of the nut 104 abuts against a proximal end face 105c of the sleeve 105. As the nut 104 is screwed to the joint body 103, the proximal end face 105c of the sleeve 105 receives pressing force from the inner surface 104c of the nut 104 and a guided surface 105d of the sleeve 105 is guided by the guide surface 103c of the joint body 103. Accordingly, as shown in Fig. 5(c), the distal end portion 105b of the sleeve 105 bites into an outer peripheal surface 102b of the pipe 102. Thus, the pipe joint 101 connects the pipe 102 with the joint body 103.

However, in the pipe joint 101 as configured above, when the sleeve 105 is separated from the nut 104, and when the distal end portion 105b of the sleeve 105 bites into the outer peripheral surface 102b of the pipe 102, the sleeve 105 receives pressing force from the guide surface 103c of the joint body 103. This makes the separation timing of the sleeve 105 from the nut 104 unstable. In other words, the sleeve 105 may be separated from the nut 104 after the distal end portion 105b bites into the outer peripheral surface 102b, or the distal end portion 105b may bite into the outer peripheral surface 102b after the sleeve 105 is separated from the nut 104. In the case where the sleeve 105 is separated from the nut 104 after the distal end portion 105b bites into the pipe and the sealing property is ensured, the sleeve 105 is rotated with the nut 104 in a state shown in Fig. 6 from the time when the distal end portion 105b bites into the pipe until the time when the sleeve 15 is separated from the nut 104. Therefore, the distal end portion 105b may damage the outer peripheral surface 102b of the pipe 102. The damage on the outer peripheral surface 102b of the pipe 102 may deteriorate the sealing property at a portion where the sleeve 105 bites into.

An objective of the present invention is to provide a pipe joint that is configured such that a sleeve which is integrated with a nut is separated from the nut by screwing of the nut, and stabilizes separation timing of the sleeve from the nut and ensures the sealing property at a portion where the sleeve bites into.

According to one aspect of the present invention, there is provided a pipe joint having a joint body, a nut, and a sleeve. In the joint body, a joint hole is formed to join a pipe and a threaded portion is formed on an outer periphery. A guide surface is formed on an inner surface of the joint hole so as to expand in diameter from an inner side to an outer side. The nut is threaded to the threaded portion. In a state where the pipe is inserted to the joint hole, the sleeve is deformed by being depressed by the guide surface due to threading of the nut to the joint body and the sleeve is guided by the guide surface so as to bite into an outer periphery of the tube. The sleeve is integrated with the nut before the nut is threaded to the joint body. The pipe joint further comprises a cutting structure that separates the sleeve from the nut before the sleeve is pressed against the guide surface at the time of the threading of the nut to the joint body.

According to this configuration, the sleeve that bites into the outer periphery of the pipe due to the threading of the nut to the joint body is integrated with the nut before the nut is threaded to the joint body. Therefore, as compared with the case where the sleeve is constructed as a separate body from the nut, the sleeve is prevented from being lost until the pipe is joined. Therefore, it is unnecessary to stock the sleeve as a spare. Furthermore, the work of assembling the sleeve is unnecessary when the pipe is joined to the joint body, so that the workability in the connecting operation of the pipe is enhanced.

The sleeve is separated from the nut by the cutting structure before the sleeve is depressed by the guide surface of the joint body and deformed at the threading of the nut to the joint body. Therefore, the sleeve is reliably separated from the nut before the sleeve bites into the outer peripheral surface of the pipe, and the separation timing of the sleeve from the nut is prevented from being unstable. Therefore, the sleeve does not bites into the outer periphery of the pipe before the sleeve is separated from the nut, and the outer periphery of the pipe is not damaged by the integral rotation of the sleeve and the nut. Thus, deterioration of the sealing property is suppressed at portions where the sleeve bites.

### BRIEF DESCRIPTION OF THE DRAWINGS

Fig. 1 is a partial cross-sectional view showing the construction of a pipe joint according to the present invention;
Fig. 2 is a partial cross-sectional view showing a joint body;
Fig. 3 is a partial cross-sectional view showing a nut;
Fig. 4(a) is a cross-sectional view showing a state before a sleeve is cut off;
Fig. 4(b) is a cross-sectional view showing a state when the sleeve receives pressing force and is cut off;
Fig. 4(c) is a cross-sectional view showing a state after the sleeve is cut off;
Fig. 5(a) is a cross-sectional view showing a state before a sleeve is cut off according to a pipe joint of a prior art;
Fig. 5(b) is a cross-sectional view showing a state after the sleeve is cut off;
Fig. 5(c) is a cross-sectional view showing a state when the sleeve bites into a pipe; and
Fig. 6 is a cross-sectional view showing a state from the sleeve bites into the pipe until the sleeve is separated.

### BEST MODE FOR CARRYING OUT THE INVENTION

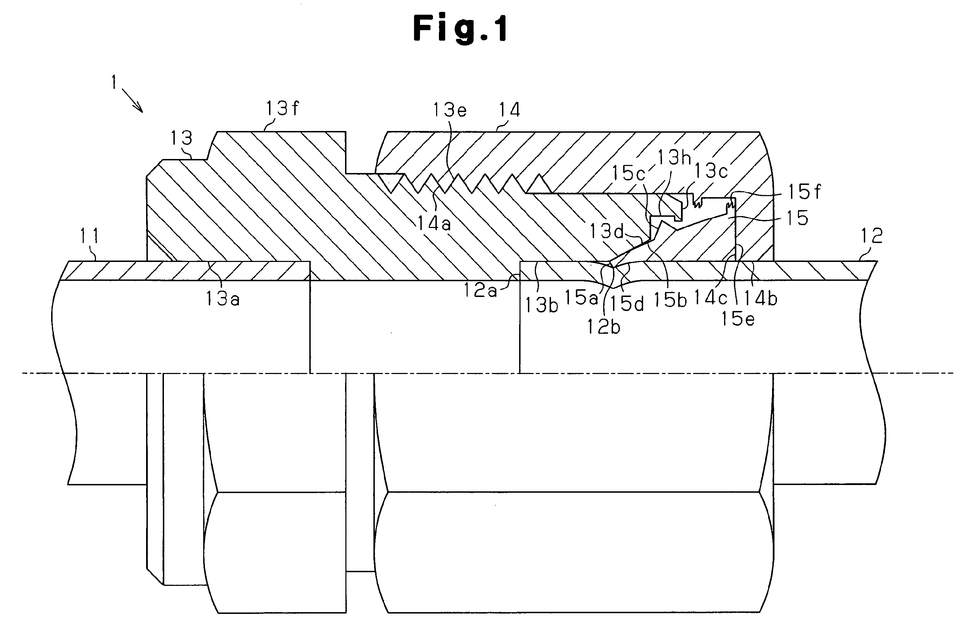

A first embodiment of a pipe joint according to the present invention will be described with reference to Figs. 1 to 4.

Fig. 1 is a partial cross-sectional view showing the construction of a pipe joint. The pipe joint 1 connects pipes 11 and 12, and has a joint body 13 having a cylindrical shape into which the pipes 11, 12 are inserted, a nut 14 threaded with the joint body 13, and a sleeve 15 which is interposed between the joint body 13 and the nut 14 at the pipe joining operation and has an annular shape. The pipe 11 is fixed to the joint body 13, for example, by brazing at a socket portion 13a formed at the distal portion of the joint body 13. The distal portion 12a of the pipe 12 to be connected to the joint body 13 is inserted into a joint hole 13b formed at the proximal portion of the joint body 13. The distal end portion 15a of the sleeve 15 bites into the outer peripheral surface 12b of the pipe 12 by the screwing of the nut 14 to the joint body 13, whereby the pipe 12 inserted to the joint body 13 is joined to the joint body 13.

The sleeve 15 biting into the pipe 12 is integrated with the nut 14 before the pipe 12 is connected, and a contact surface 15c of the sleeve 15 as a first contact portion and a contact surface 13c of the joint body 13 as a second contact portion contacted each other by the screwing of the nut 14 to the joint body 13 so that the sleeve 15 is cut off and separated from the nut 14. A distal end portion 15a of the sleeve 15 is pressed by a guide surface 13d formed on the joint body 13 and deformed by the further screwing of the nut 14 to the joint body 13. Since a guided surface 15b formed on the sleeve 15 is guided by the guide surface 13d, the distal end portion 15a bites into the outer peripheral surface 12b of the pipe 12. The thus constructed pipe joint 1 will be hereafter described in detail.

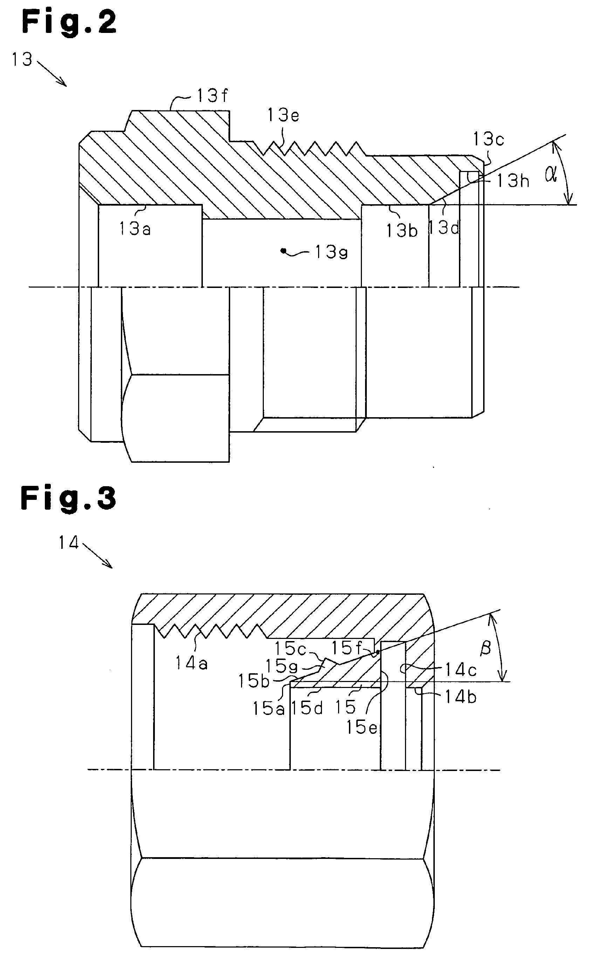

Fig. 2 is a partial cross-sectional view showing the joint body 13. The joint body 13 has the socket portion 13a to which the pipe 11 is fixed, the joint hole 13b in which the pipe 12 is inserted, the contact surface 13c which contacts the sleeve 15 at the screwing of the nut 14, a guide surface 13d, an external thread portion 13e with which the nut 14 is threaded, and a nut portion 13f formed on the outer peripheral surface of the joint body 13. The guide surface 13d guides the sleeve 15 when the sleeve 15 bites into the pipe 12.

The socket portion 13a has a circular-hole shape, and has an inner diameter which is substantially equal to the outer diameter of the pipe 11 to be fixed. The joint hole 13b has a circular-hole shape, and has an inner diameter which is substantially equal to the outer diameter of the pipe 12 to be inserted. The socket portion 13a and the joint hole 13b communicate with each other through an inner space 13g. The contact surface 13c is formed on a surface of an end of the joint body 13 where the nut 14 is screwed, that is, an end face of the proximal portion of the joint body 13 so as to extend substantially perpendicular to the screwing direction of the nut 14. The guide surface 13d is located at the proximal portion of the joint body 13, that is, the inlet of the pipe 11 in the joint hole 13b, and it expands in diameter from the inner side to the outer side. When the nut 14 is threaded with the joint body 13, the guided surface 15b of the sleeve 15 is guided by the guide surface 13d, and the distal end portion 15a of the sleeve 15 bites into the outer peripheral surface 12b of the pipe 12. The external thread portion 13e has a thread shape at a place of the outer peripheral surface of the joint body 13 corresponding to the joint hole 13b and an inner space 13g so as to be threaded with the nut 14. The joint body 13 is held by the nut portion 13f when the nut 14 is threaded with the joint body 13.

The joint body 13 has a recess portion 13h between the guide surface 13d and the contact surface 13c. The recess portion 13h prevents the joint body 13 from contacting a projection 15g which forms the contact surface 15c of the sleeve 15 when the sleeve 15 bites into the pipe 12 by screwing of the nut 14 to the joint body 13.

Fig. 3 is a partial cross-sectional view showing the nut 14. The nut 14 has an internal thread portion 14a to be threaded with the external thread portion 13e of the joint body 13, a holding hole 14b for holding the outer periphery of the pipe 12, and an inner surface 14c which presses the sleeve 15 when the sleeve 15 bites into the pipe 12. The sleeve 15 is integrated with the nut 14.

The internal thread portion 14a is formed on the inner peripheral surface of the distal end portion of the nut 14 which is threaded with the joint body 13. The holding hole 14b has a circular-hole shape. Furthermore, the holding hole 14b has an inner diameter which is substantially equal to the outer diameter of the pipe 12 to be held. The inner surface 14c corresponds to a side surface of the projection having the holding hole 14b facing the distal portion of the nut 14. The inner surface 14c extends substantially perpendicular to the threading direction of the nut 14.

The sleeve 15 is formed between the internal thread portion 14a and the inner surface 14c on the inner peripheral surface of the nut 14, as shown in Fig. 3. The sleeve 15 is integrated with the nut 14, and the sleeve 15 is connected to the nut 14 by the proximal portion 15f. The sleeve 15 has the distal end portion 15a, the guided surface 15b, the contact surface 15c, the inner peripheral surface 15d facing the pipe 12 and a proximal end surface 15e. The distal end portion 15a bites into the outer peripheral surface 12b of the pipe 12. The guided surface 15b is guided by the guide surface 13d of the joint body 13 when the sleeve 15 bites into the pipe 12. The contact surface 15c contacts the joint body 13 at the threading of the nut 14. The proximal end surface 15e receives pressing force when the sleeve 15 bites into the pipe 12.

The distal end portion 15a of the sleeve 15 faces the distal portion of the nut 14. The guided surface 15b is comprised of the outer peripheral surface of the sleeve 15. The outer peripheral surface expands in diameter from the distal end portion 15a to the proximal portion 15f of the sleeve 15. An inclination angle β of the guided surface 15b relative to a line extending in the fastening direction of the nut 14 is set to be smaller than the inclination angle α of the guide surface 13d relative to the same line. Accordingly, when the nut 14 is threaded with the joint body 13, the distal end portion 15a of the sleeve 15 which is next to the guided surface 15b is deformed inward and bites into the outer peripheral surface 12b of the pipe 12. The contact surface 15c is comprised of the projection 15g which is projected from the guided surface 15b. In other words, the surface of the projection 15g forms the contact surface 15c. The inner peripheral surface 15d has a circular-hole shape, and has an inner diameter which is substantially equal to the outer diameter of the pipe 12. The proximal end surface 15e faces the inner surface 14c of the nut 14. The proximal end surface 15e receives pressing force from the inner surface 14c after the sleeve 15 is separated from the nut 14, whereby the distal end portion 15a bites into the outer peripheral surface 12b of the pipe 12. As shown in Fig. 3, the proximal portion 15f of the sleeve 15 is formed to be thin. Therefore, the proximal portion 15f is cut off, and the sleeve 15 is easily separated from the nut 14.

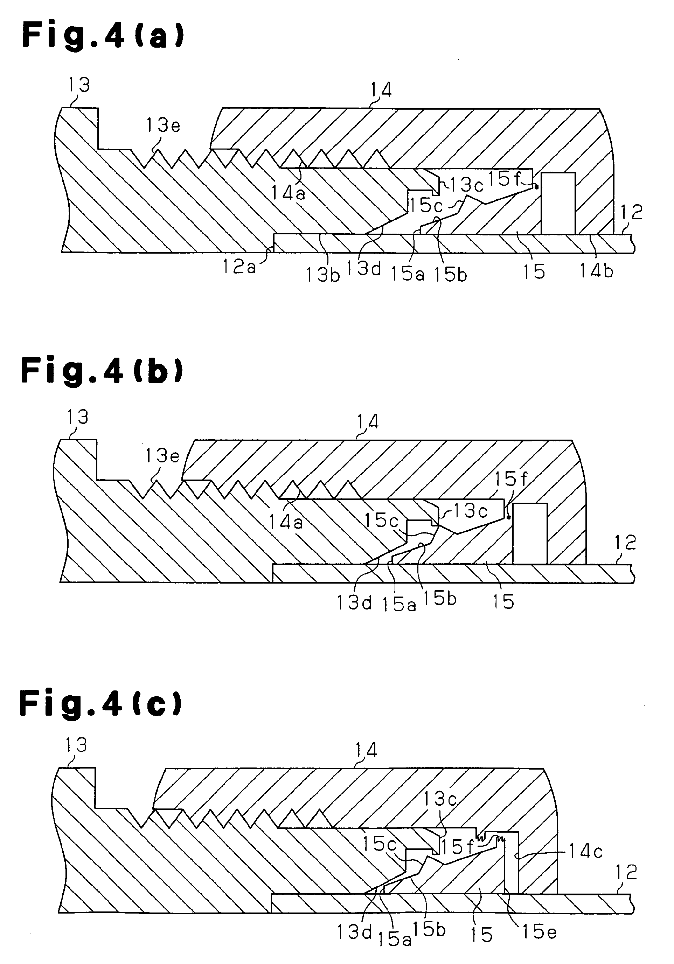

Next, a method for connecting piping for joining the pipe 12 to the pipe joint 1 will be described. Fig. 4 is a cross-sectional view showing the operation of the surrounding of the sleeve 15 of the pipe joint 1. When the pipe 12 is joined to the pipe joint 1, the pipe 12 is first inserted into the holding hole 14b of the nut 14, and the distal portion 12a of the pipe 12 is inserted to the joint hole 13b of the joint body 13. Then, the internal thread portion 14a of the nut 14 is threaded with the external thread portion 13c of the joint body 13 as shown in Fig. 4(a) under the state that the nut portion 13f of the joint body 13 is held.

When the nut 14 is screwed, the contact surface 15c of the sleeve 15 abuts against the contact surface 13c of the joint body 13. At this time, the guide surface 13d of the joint body 13 does not contact the guided surface 15b of the sleeve 15.

The pressing force applied to the contact surface 15c of the sleeve 15 by the contact surface 13c of the joint body 13 is increased in accordance with the thread engagement of the nut 14. Accordingly, at the proximal portion 15f of the sleeve 15, shearing force applied along the screwing direction of the nut 14 is increased, and the proximal portion 15f of the sleeve 15 is cut off. Accordingly, the nut 14 and the sleeve 15 are separated from each other as shown in Fig. 4(c). The structure in which the contact surface 15c of the sleeve 15 and the contact surface 13c of the joint body 13 contact each other at the thread engagement of the nut 14 to the joint body 13 corresponds to the cutting structure.

When the nut 14 and the sleeve 15 are separated from each other, the guide surface 13d of the joint body 13 dos not contact the guided surface 15b of the sleeve 15. Therefore, the distal end portion 15a is prevented from biting into the outer peripheral surface 12b of the pipe 12 when the sleeve 15 receives the pressing force from the guide surface 13d. That is, the sleeve 15 is reliably separated from the nut 14 before the distal end portion 15a bites into the outer peripheral surface 12b of the pipe 12.

When the nut 14 is further screwed, the guide surface 13d of the joint body 13 abuts against the guided surface 15b of the sleeve 15, and the inner surface 14c of the nut 14 abuts against the proximal end surface 15e of the sleeve 15. Then, in accordance with the screwing of the nut 14, the proximal end surface 15e of the sleeve 15 receives pressing force from the inner surface 14c of the nut 14, and the guided surface 15b of the sleeve 15 is guided by the guide surface 13d of the joint body 13, whereby the distal end portion 15a of the sleeve 15 bites into the outer peripheral surface 12b of the pipe 12 as shown in Fig. 1.

The projection 15g forming the contact surface 15c of the sleeve 15 is distant from the joint body 13 by the recess portion 13h formed on the joint body 13 from the time when the nut 14 and the sleeve 15 are separated from each other until the time when the sleeve 15 bites into the pipe 12. That is, the joint body 13 is distant from the projection 15g when the sleeve 15 bites into the pipe 12.

As described above, the pipe joint 1 joins the pipe 12 to the joint body 13 by making the distal end portion 15a of the sleeve 15 bite into the outer peripheral surface 12b of the pipe 12. At this time, the boundary between the distal end portion 15a of the sleeve 15 and the outer peripheral surface 12b of the pipe 12 is hermetically sealed by the biting of the distal end portion 15a of the sleeve 15. Furthermore, the guided surface 15b of the sleeve 15 and the guide surface 13d of the joint body 13 are brought into close contact with each other, whereby the boundary between the guided surface 15b of the sleeve 15 and the guide surface 13d of the joint body 13 is hermetically sealed. The sealing performance between the pipe 12 and the joint body 13 is ensured by the hermetical sealing at these places.

The embodiment described above has the following advantages.
(1) In the above embodiment, the sleeve 15 biting into the outer peripheral surface 12b of the pipe 12 is integrated with the nut 14 before the nut 14 is threaded in the joint body 13. Therefore, as compared with the case where the sleeve 15 is constructed as a separate body from the nut 14, the sleeve 15 is prevented from being lost until the pipe 12 is joined. Therefore, it is unnecessary to stock the sleeve 15 as a spare. Furthermore, the sleeve 15 is integrated with the nut 14, and thus the work of assembling the sleeve 15 is unnecessary when the pipe 12 is joined to the joint body 13, so that the workability in the connecting operation of the pipe 12 is enhanced.
(2) In the above embodiment, the pipe joint 1 is configured such that the sleeve 15 is reliably separated from the nut before the distal end portion 15a of the sleeve 15 bites into the outer peripheral surface 12b of the pipe 12 at the threading of the nut 14 for joining the pipe 12. Therefore, the separation timing of the sleeve 15 from the nut 14 is prevented from being unstable. As a result, the distal end portion 15a does not bite into the outer peripheral surface 12b of the pipe 12 before the sleeve 15 is separated from the nut 14, and the outer peripheral surface 12b of the pipe 12 is prevented from being damaged by the integral rotation of the sleeve 15 and the nut 14. Therefore, the sealing property is not deteriorated at portions where the distal end portion 15a bites into the outer peripheral surface 12b due to damages on the outer peripheral surface 12b of the pipe 12.
(3) According to the pipe joint 1 of the above embodiment, when the nut 14 is screwed to the joint body for joining the pipe 12, the contact surface 15c of the sleeve 15 abuts against the contact surface 13c of the joint body 13. Accordingly, the shearing force is generated at the proximal portion 15f of the sleeve 15, and the sleeve 15 is cut off from the nut 14. Therefore, the timing when the guided surface 15b of the sleeve is pressed against the guide surface 13d of the joint body 13 and the timing when the sleeve 15 is cut off from the nut 14 can be controlled by changing the relation between the shapes and the sizes of the sleeve 15 and the joint body 13. Thus, before the guided surface 15b of the sleeve 15 is pressed against the guide surface 13d of the joint body 13, that is, before the distal end portion 15a of the sleeve 15 bites into the outer peripheral surface 12b of the pipe 12, the contact surface 15c of the sleeve 15 abuts against the contact surface 13c of the joint body 13 so as to reliably cut off and separate the sleeve 15 from the nut 14.
(4) According to the above embodiment, the contact surface 15c of the sleeve 15 is formed of the projection 15g projecting from the guided surface 15b which is guided by the guide surface 13d when the sleeve 15 bites into the outer peripheral surface 12b of the pipe 12. Therefore, the contact surface 15c of the sleeve 15 easily abuts against the contact surface 13c of the joint body 13 before the guided surface 15b of the sleeve 15 is pressed by the guide surface 13d of the joint body 13.
(5) According to the above embodiment, the contact surface 13c of the joint body 13 is formed on the end face of the proximal portion of the joint body 13. Therefore, at the threading of the nut 14, the contact surface 13c of the joint body 13 and the contact surface 15c of the sleeve 15 easily contact each other before the guided surface 15b of the sleeve 15 is pressed against the guide surface 13d of the joint body 13.
(6) According to the above embodiment, the recess portion 13h formed on the joint body 13 prevents the joint body 13 from contacting the projection 15g which forms the contact surface 15c of the sleeve 15 from the time when the nut 14 and the sleeve 15 are separated from each other until the time when the sleeve 15 bites into the pipe 12. Therefore, the sleeve 15 is not prevented from biting into the pipe 12 by the contact between the joint body 13 and the projection 15g.

The above embodiment may be modified as follows.

In the above embodiment, the sleeve 15 is integrally formed with the nut 14. However, the present invention is not limited to this construction. The sleeve 15 may be joined to the nut 14 by adhesion, fitting or other methods.

In the above embodiment, the contact surface 15c of the sleeve 15 is formed of the projection 15g, and the contact surface 13c of the joint body 13 is formed on the end face of the proximal portion of the joint body 13. The contact surface 15c and the contact surface 13c may be formed on different places as long as the sleeve 15 is separated from the nut 14 before the sleeve 15 bites into the pipe 12.

In the above embodiment, the sleeve 15 is integrally formed with the nut 14. However, the present invention is not limited to this construction. The sleeve 15 may be integrally formed with the joint body 13. In this case, the nut 14 is threaded to the joint body 13 such that the sleeve 15 is cut off and separated from the joint body 13 before the sleeve 15 bites into the pipe 12.

In the above embodiment, the pipe joint 1 is used to connect the pipe 11 and the pipe 12. However, the present invention is not limited to this construction, and the construction of the pipe joint 1 may be applied to connection portions of refrigerant pipes through which an indoor unit and an outdoor unit of an air conditioner, a connecting portion of a closing valve which is disposed in a refrigerant pipe of an air conditioner, or a connection portion of a refrigerant pipe in another refrigeration device.

## Claims

1. A pipe joint comprising:
a joint body having a joint hole formed to join a pipe and a threaded portion on an outer periphery, wherein a guide surface is formed on an inner surface of the joint hole so as to expand in diameter from an inner side to an outer side;
a nut threaded to the threaded portion; and
a sleeve that is deformed by being depressed by the guide surface due to threading of the nut to the joint body and is guided by the guide surface so as to bite into an outer periphery of the tube, with the pipe being inserted into the joint hole,
the pipe joint being **characterized in that** the sleeve is integrated with the nut before the nut is threaded to the joint body,
wherein the pipe joint further comprises a cutting structure that separates the sleeve from the nut before the sleeve is pressed against the guide surface at the time of the threading of the nut to the joint body.

2. The pipe joint according to claim 1, being **characterized in that** the cutting structure has a first contact portion formed on the sleeve and a second contact portion formed on the joint body, wherein the first contact portion and the second contact portion contact each other when the nut is threaded to the joint body, and the contact causes shearing force applied to the sleeve.

3. The pipe joint according to claim 2, being **characterized in that** the sleeve has a guided surface that is pressed and guided by the guide surface, and the first contact portion is comprised of a projection formed on the guided surface.

4. The pipe joint according to claim 3, being **characterized in that** the joint body is distant from the projection when the sleeve bites into the pipe due to the threading of the nut to the joint body.

5. The pipe joint according to any one of claims 2 to 4, being **characterized in that** the second contact portion is formed on a surface of an end portion of the joint body where the nut is threaded.
